(19) Europäisches Patentamt / European Patent Office / Office européen des brevets

(11) **EP 4 020 780 B1**

(12) **EUROPEAN PATENT SPECIFICATION**

(45) Date of publication and mention
of the grant of the patent:
**24.01.2024 Bulletin 2024/04**

(21) Application number: **20216594.0**

(22) Date of filing: **22.12.2020**

(51) International Patent Classification (IPC):
**H02K 35/06** (2006.01)    **H02K 21/44** (2006.01)
**H02K 41/03** (2006.01)

(52) Cooperative Patent Classification (CPC):
**H02K 21/44; H02K 35/06; H02K 41/033;**
H02K 2213/03

(54) **MAGNETIC FLUX SWITCHING TYPE PERMANENT MAGNET GENERATOR**

PERMANENTMAGNETGENERATOR VOM MAGNETFLUSSUMSCHALTTYP

GÉNÉRATEUR À AIMANT PERMANENT DE TYPE À COMMUTATION DE FLUX MAGNÉTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.06.2022 Bulletin 2022/26**

(73) Proprietors:
• **Ventspils Augstskola**
  **Ventspils 3600 (LV)**
• **Latvo AS**
  **Riga 1005 (LV)**

(72) Inventors:
• **BEZRUKOVS, Valerijs**
  **3600 Ventspils (LV)**
• **BEZRUKOVS, Vladislavs**
  **3601 Ventspils (LV)**
• **BEZRUKOVS, Deniss**
  **1010 Riga (LV)**
• **KONUHOVA, Marina**
  **1021 Riga (LV)**

• **BERZINS, Agris**
  **1035 Riga (LV)**

(74) Representative: **Vitina, Maruta et al
Agency TRIA ROBIT
P.O. Box 22
1010 Riga (LV)**

(56) References cited:
**LV-A- 14 695      LV-A- 15 501
LV-B- 14 695**

• **Bezrukovs Vladislavs: "Friendyno:
Environmentally friendly small power generator
with the rotor linear motion", Ventspils University
of Applied Sciences - ERDF project Nr.
1.1.1.1/18/A/125 , 30 October 2020 (2020-10-30),
XP055809416, MINOX 2020 Retrieved from the
Internet:
URL:https://irp-cdn.multiscreensite.com/f6
b5d556/files/uploaded/Friendyno_MINOX2020_
Bezrukovs_2020.10.30.pdf [retrieved on
2021-06-01]**

EP 4 020 780 B1

**Description**

The invention relates to electrical engineering, in particular to AC electric machines with a movable magnetic flux switch and a fixed anchor with a permanent magnet, as well as an anchor winding covering the anchor's magnetic open-core, and can be used as a generator, for example, for a bicycle wheel and as power supply of low-power electronic devices.

There is known a generator [LV15501A, publ. 20.05.2020] with permanent magnet and magnetic flux switching, comprising a permanent magnet, a magnetic flux switch connected to the drive, and an inductor, which contains a group of magnetic open-cores made of laminated silicone steel sheets, said group includes two pairs of the magnetic open-cores sections of the magnetic circuit of which contain two parallel inner rods of one pair and the second pair and two outer rods of one pair and the second pair, the open ends of the inner rods and the outer rods are the teeth of the magnetic open-cores, the magnetic flux switch is made in the form of a tape made of non-magnetic material, on which magnetic flux tumblers are placed and fixed in grooves with a uniform step $\tau_z$, made of laminated silicone steel, wherein the sheets of laminated silicone steel of all the rods of the open magnetic circuits and magnetic flux switches are located perpendicular to the direction of movement of the magnetic flux switch tape; teeth at the end of the inner and outer rods of the magnetic open-cores located on one side relative to the tape of the magnetic flux switch are placed in the grooves of the first plate of non-magnetic material, and the teeth at the end of the inner and outer rods of the magnetic open-cores located on the other side of the magnetic flux switch tape are placed in the grooves of the second plate of non-magnetic material; the distance between the tooth at the end of the inner rod and the tooth at the end of the outer rod in each pair of magnetic open-cores corresponds to the equation (Eq.)

$$\tau_1 = 3/2\tau_z \qquad\qquad (1)$$

the teeth at the ends of all inner and outer rods are separated from the magnetic flux switches by air gaps $\delta_1$ and $\delta_2$; the distance between the teeth at the ends of the inner rods in each pair of the magnetic open-cores corresponds to the Eq.

$$\tau_2 = \tau_z, \qquad\qquad (2)$$

an anchor winding is placed on the inner rods of each pair of the magnetic open-cores, in which the output of one coil is connected to the input of another coil.

A disadvantage of the known generator is that the permanent magnet is located above the magnetic open-cores. This design increases the weight of the magnetic circuit, complicates the manufacturing technology and creates large stray magnetic fluxes. All this leads to a decrease in the specific power of the device and increases the cost of its manufacture.

The technical problem solved by the present invention is to increase the specific power of the generator.

In a known permanent magnet generator with magnetic flux switching, comprising a permanent magnet, a magnetic flux switch connected to the drive, and an inductor, whichcontains a group of magnetic open-cores made of laminated silicon steel sheets, said group includes two pairs of the magnetic open-cores, sections of the magnetic open-cores of which contain two parallel inner rods of first pair and second pair and two outer rods of first pair and second pair, wherein an anchor winding is wound around the inner rods and outer rods are placed on outer side of the anchor winding, open ends of the inner rods and the outer rods are teeth of the magnetic open-cores, the magnetic flux switch is made in the form of a tape of non-magnetic material, on which toggle switches of the magnetic flux are placed and fixed in grooves with a uniform step $\tau_z$, said toggle switches being made of laminated silicone steel, wherein, the sheets of laminated silicone steel of all rods of the magnetic open-cores and toggle switches of magnetic flux are perpendicular to the direction of movement of the tape of the magnetic flux switch; the teeth at the end of the inner rods and the outer rods of the magnetic open-cores located on one side of the tape of the magnetic flux switch, are placed in the grooves of a first plate made of non-magnetic material, and the teeth at the end of the inner rods and the outer rods of magnetic open-cores located on the other side of the tape of the magnetic flux switch, are placed in the grooves of a second plate made of non-magnetic material; the distance between the tooth on the end of the inner bar and the tooth on the end of the outer bar in each pair of the magnetic open-cores is determined by the Eq. (1), the teeth at the ends of all inner rods and the outer rods are separated from the magnetic toggle switches by air gaps $\delta_1$ and $\delta_2$ ; the distance between the teeth at the ends of the inner rods and in each pair of the magnetic open-cores is determined by the Eq. (2), on the inner rods and of each pair of the magnetic open-cores the anchor winding is placed, in which the output of one coil is connected to the input of another coil, **according to the present invention,** the inductor contains three said groups of the magnetic open-cores with the anchor windings and the permanent magnets, wherein the outer rods of the second group of the magnetic open-cores are separated from the outer rods of the first group and from the outer rods of the third group of the magnetic open-cores at a distance that is determined by the Eq.

$$\tau_3 = k/3\tau_z, \qquad\qquad (3)$$

where k is a design factor equal to 1 or 2,

wherein the magnetic open-cores connected by the first plate of non-magnetic material form a first section of the magnetic open-cores, and the magnetic open-cores connected by a second plate of non-magnetic material form a second section of the magnetic open-cores; on outer rods of the first group and on outer rods of the third group of both sections of the magnetic open-cores, said outer rods being lateral to assembled three groups of the magnetic open-cores, on their lateral outer surfaces which are lateral side of the sheets of laminated silicone steel being perpendicular to the direction of movement of the tape, four lateral permanent magnets are placed; on the lateral surfaces of the adjacent outer rods of the first group and outer rods of the second group of the magnetic open-cores and on the lateral surfaces of the adjacent outer rods of the second group and outer rods of the third group of both sections of the magnetic open-cores are placed four middle permanent magnets which are common to the rods in adjacent groups; lateral permanent magnets and middle permanent magnets in the first section of the magnetic open-cores have the same polarity, and side permanent magnets and middle permanent magnets in the second section of the magnetic open cores have polarity opposite to that of the permanent magnets of the first section; wherein in each group the magnetic flux in the inner rods is directed in one direction, between all permanent magnets of the first section and all permanent magnets of the second section of the magnetic open cores and the lateral surfaces of the outer rods of the magnetic open cores are placed gaskets made of steel; the lateral permanent magnets and the middle permanent magnets of the first and second sections are connected by bridges made of laminated silicone steel, and free terminals of the anchor windings of all three groups of the magnetic open-cores are connected to each other according to a connection scheme of the anchor windings of a three-phase electrical machine.

The design of the present invention generator with permanent magnets and magnetic flux switching has a shorter magnetic circuit to close the main magnetic flux, which is associated with the anchor windings. At the same time, the location of the anchor windings on the rods of three groups of the magnetic open-cores, phase-shifted by a distance $\tau_3$, leads to a shift in the voltage vectors at the output of the anchor windings by an angle of 120 electrical degrees. Thus, the generator has the properties of a three-phase electric machine, which increases its efficiency and leads to a decrease in the weight of the magnetic circuit at the same power. All this serves to increase the specific power of the generator.

The free terminals of the anchor windings of the generator of all three groups of open magnetic circuits can be interconnected according to the scheme of connecting the windings of a three-phase electric machine with a star connection.

The free terminals of the anchor windings of the generator of all three groups of the magnetic open-cores can be interconnected according to the connection scheme of the windings of a three-phase electric machine with a delta connection.

The gaskets made of steel being located on the side surfaces of the outer rods of the first and third groups of the magnetic open-cores of the first and second sections can have a slot, side walls of which enclose said outer rods.

The gaskets made of steel being located on the side surfaces of the outer rods of the first group and of the outer rods of the second group and on the side surfaces of the outer rods of the second group and the outer rods of the third group of the magnetic open-cores of the first and second sections, can have a protrusion that is pressed against walls of said outer rods.

The gaskets made of steel being located under the middle magnets can have a cutout between the teeth on the outer rods of the first and second groups and on the outer rods of the second and third groups of the magnetic open-cores of the first and second sections, which is deepened from the air gap by an amount equal to $\tau_3$.

The magnetic flux switch tape with the magnetic flux toggle switches fixed therein can be made in the form of a closed loop configured to be connected to a rotary motion drive.

The magnetic flux switch tape with the magnetic flux toggle switches fixed therein can be configured to be connected to a linear reciprocating drive.

Recesses can be made on ends of the magnetic flux toggle switches.

The generator further comprising a voltage convertor, wherein phase terminals of the anchor windings can be connected to an input of the voltage converter.

In the Fig.1 is shown the spatial arrangement of the elements of the magnetic open-core of the inductor-generator with permanent magnets and the magnetic flux switch.

In the Fig. 2 is shown the spatial arrangement of the magnetic open-cores of one section of the generator, connected by one plate, with permanent magnets and the gaskets made of steel.

In the Fig. 3 is shown a scheme of the location of three groups of the magnetic open-cores with the anchor windings and a tape of the magnetic flux switch, indicating the direction of closure of the main magnetic fluxes and the distance between the rods.

In the Fig. 4 is shown a side view of the magnetic open-core of the inductor, which shows the magnets, the rods of the magnetic open-cores, separated by the tape of the magnetic flux switch with magnetic toggle switches, indicating the direction of closure of the main magnetic fluxes in the rods and the bridge.

In the Fig. 5 is shown the connection of the coils of the anchor windings of three groups of the magnetic open-cores according to the connection scheme of the anchor winding of a three-phase electric machine with a delta connection.

In the Fig. 6 is shown the connection of the coils of the anchor windings of three groups of the magnetic open-cores according to the connection scheme of the anchor winding of a three-phase electric machine with a star connection.

In the Fig. 7 is shown a scheme of the connection of the phase terminals of the anchor windings of the generator connected to the input of the voltage converter.

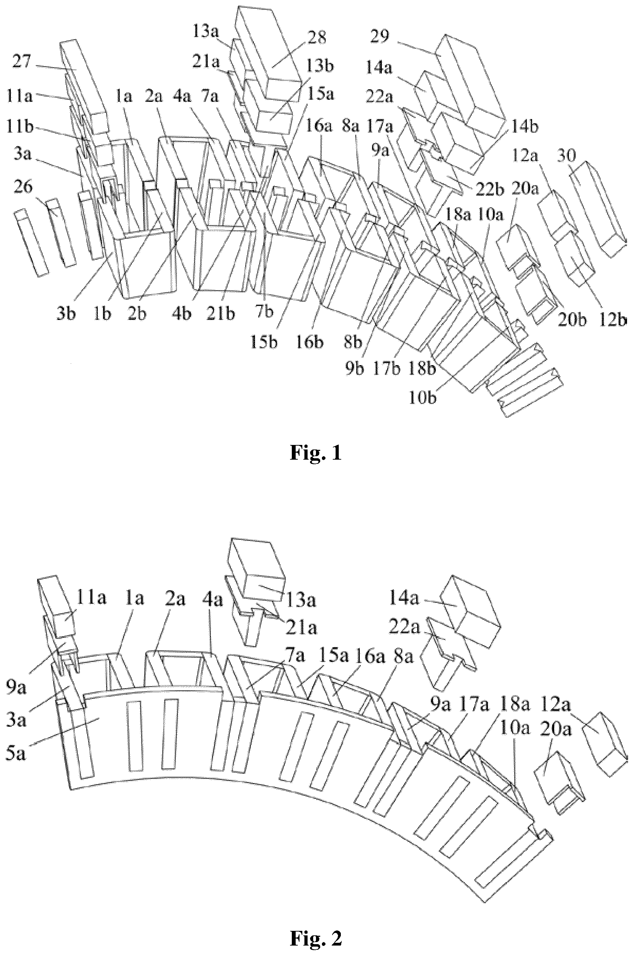

Magnetic flux switching type permanent magnet generator (shown in Fig. 1, 2, 3) comprises three groups of the magnetic open-cores made of laminated silicone steel. Each group of the magnetic open-cores comprises two pairs of the magnetic open-cores, the magnetic circuit sections of which contain two parallel inner rods 1a, 1b; 2a, 2b (first group), 15a, 15b; 16a, 16b (second group), 17a, 17b; 18a, 18b (third group), and two outer rods 3a, 3b; 4a, 4b (first group), 7a, 7b; 8a, 8b (second group), 9a, 9b; 10a, 10b (third group). The open ends of all rods are the teeth of the magnetic open-core. The magnetic flux switch is made in the form of a tape 25 made of non-magnetic material, in the grooves of said tape are placed and fixed with a uniform step $\tau_z$ magnetic flux toggle switches 26 made of laminated silicone steel.

The teeth of the outer rods 3a, 4a, 7a, 8a, 9a, 10a and the inner rods 1a, 2a, 15a, 16a, 17a, 18a of the magnetic open-cores located on one side of the magnetic flux switch are located in the grooves of the first plate 5a of non-magnetic material, and the teeth of the outer rods 3b, 4b, 7b, 8b, 9b, 10b and the inner rods 1b, 2b, 15b, 16b, 17b, 18b of the magnetic open-cores located on the other side of the magnetic flux switch are located in the grooves of the second plate 5b of non-magnetic material. Thus, the magnetic open-cores connected by a first non-magnetic material plate 5a form a first section of the magnetic open-cores, and the magnetic open-cores connected by a second non-magnetic material plate 5b form a second section of the magnetic open-cores. The distance between the tooth at the end of the inner rod and the tooth at the end of the outer rod in each pair of the magnetic open-core is determined by Eq. (1). The teeth at the ends of the inner and outer rods are separated from the magnetic flux toggle switches by air gaps $\delta_1$ and $\delta_2$. The distance between the teeth at the ends of the inner rods in each pair of the magnetic open-cores is determined by Eq. (2).

On the inner rods 1a, 2a; 15a, 16a; 17a, 18a; 1b, 2b; 15b, 16b; 17b, 18b of each pair of the magnetic open-cores are placed coils 6a, 6b, 23a, 23b, 24a, 24b, respectively, one terminal of which is the beginning, and the other is the end (of winding). In each group, the end of the coils 6a, 23a, 24a in the first section is connected to the beginning of the corresponding coil 6b, 23b, 24b in the second section.

The first and second groups of the magnetic open-cores, the second and third groups of the magnetic open-cores are separated from each other by a distance determined by Eq. (3).

On the side outer rods 3a, 10a, 3b, 10b of the first and third groups of the magnetic open-cores, side permanent magnets 11a, 11b, 12a, 12b, respectively, are arranged. Between adjacent outer rods 4a, 7a; 4b, 7b of the first and second group of the magnetic open-cores and between adjacent outer rods 8a, 9a; 8b, 9b of the second and third groups of the magnetic open-cores, the middle permanent magnets 13a, 14a, 13b, 14b, respectively, are arranged. The polarity of the side permanent magnets 11a, 12a and the middle permanent magnets 13a, 14a of the first section of the magnetic open-cores is the same, and the polarity of the side permanent magnets 11b, 12b and the middle permanent magnets 13b, 14b of the second section of the magnetic open-cores is opposite to the polarity of the permanent magnets of the first section.

Between all the permanent magnets 11a, 12a, 13a, 14a of the first section and the permanent magnets 11b, 12b, 13b, 14b of the second section of the magnetic open-cores and the side surfaces of the outer rods 3a, 3b, 4a, 4b, 7a, 7b, 8a, 8b, 9a, 9b, 10a, 10b of the magnetic open-cores are placed gaskets 19a, 19b, 20a, 20b, 21a, 21b, 22a, 22b made of steel, respectively. Side permanent magnets 11a, 11b, 12a, 12b of the first and second sections, the middle permanent magnets 13a, 13b, 14a, 14b of the first and second sections are connected by bridges 27, 28, 29, 30 of laminated silicone steel, and the free ends of the coils 6a, 6b, 23a , 23b, 24a, 24b of the anchor windings of the generator of all three groups of the magnetic open-cores are connected according to the connection scheme of the anchor winding of a three-phase electric machine.

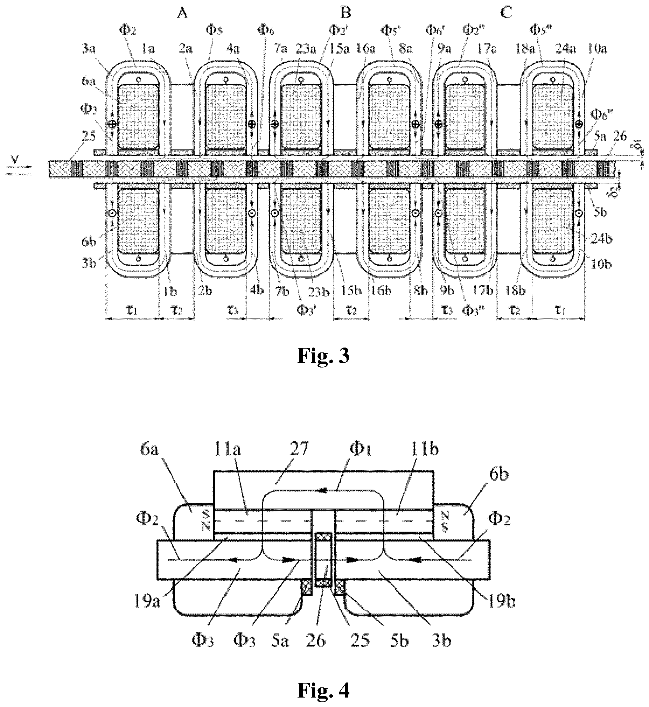

In the Fig. 4 is shown a side view of permanent magnets 11a, 11b, bridge 27, side rods 3a, 3b of the magnetic open-cores separated by tape 25 of the magnetic flux switch with the toggle switches 26 and gaskets 19a, 19b indicating the direction of closure of the main magnetic fluxes.

Permanent magnets 11a, 11b are located on the magnetic open-cores, said permanent magnets 11a, 11b are connected by a magnetic bridge 27. The arrows in the figures show the direction of the magnetic fluxes and show the polarity of the permanent magnets 11a, 11b. The teeth at the end of the rods are located in the grooves of the plates 5a, 5b of non-magnetic material.

The claimed device operates as follows.

In a static state, permanent magnets 11a, 11b, 12a, 12b, 13a, 13b, 14a, 14b create magnetic fluxes $\Phi_1$, $\Phi_4$, $\Phi_1'$, $\Phi_4'$, $\Phi_1''$, $\Phi_4''$, in the magnetic open-cores of all three groups, which pass through bridges 27, 28, 29, 30 made of silicone steel and corresponding gaskets with recess 19a, 19b, 20a, 20b and gaskets with protrusion 21a, 21b, 22a, 22b. The bridges 27, 28, 29, 30 serve to close the magnetic flux circuit in the magnetic open-cores of the first and second sections.

In the rods of the magnetic open-cores, these magnetic fluxes are divided into shunting magnetic fluxes $\Phi_3$, $\Phi_6$, $\Phi_3'$, $\Phi_6'$, $\Phi_3''$, $\Phi_6''$ and the main magnetic fluxes $\Phi_2$, $\Phi_5$, $\Phi_2'$, $\Phi_5'$, $\Phi_2''$, $\Phi_5''$ which pass through the inner rods 1a, 1b, 2a, 2b, 15a, 15b, 16a, 16b, 17a, 17b, 18a, 18b and are connected to the coils 6a, 6b, 23a, 23b, 24a, 24b of the generator anchor windings. In this case, the main and shunt magnetic fluxes are closed through the air gaps $\delta_1$ and $\delta_2$ the tape 25 with the toggle switches 26 of the magnetic flux switch.

Since the distance between the rods of the magnetic open-cores is in accordance with Eq. (1) - (3), the resistance of the magnetic circuit for the main magnetic fluxes in each group will depend on the position of the corresponding rods relative to the toggle switches 26 of the magnetic flux switch.

The location of the toggle switches 26 on the tape 25 of the magnetic flux switch with a step $\tau_z$ corresponds to their displacement relative to each other by 360 electrical degrees. Wherein, the distance between the inner rods 1a, 1b, 2a, 2b, 15a, 15b, 16a, 16b, 17a, 17b, 18a, 18b of the magnetic open-cores and the corresponding outer rods 3a, 3b, 4a, 4b, 7a, 7b, 8a, 8b, 9a, 9b, 10a, 10b according to Eq. (1) is equal to 540 electrical degrees.

As a result, the value of the magnetic resistance for the main and shunting magnetic flux in each group of the magnetic open-cores will be in antiphase, while the maximum value of the magnetic flux in the outer rods will correspond to the minimum value of the magnetic flux in the inner rods.

When the tape 25 moves at a speed V in the direction indicated by the arrows in Fig. 3, the magnitude of the resistance of the magnetic circuit for the shunt and main magnetic flux will change in antiphase, which will lead to a change in the magnitude of the magnetic flux associated with the coils of the anchor windings at an corresponding speed.

Thus, the movement of the tape 25 with the toggle switches 26 leads to the occurrence of fluctuations in the magnetic flux, which, in accordance with the law of electromagnetic induction, is accompanied by the occurrence of an electromotive force (EMF) in the coils 6a, 6b, 23a, 23b, 24a, 24b of the generator anchor windings.

In the proposed generator design, the anchor windings of the second and third groups of the magnetic open cores are displaced relative to the anchor windings of the first group by an angle of 120 and 240 electrical degrees, respectively. Thereby, the EMF at the terminals of the coils 23a, 23b, 24a, 24b located on the rods of these groups will have a corresponding phase shift of 120 and 240 electrical degrees relative to the voltage at the terminals of the coils 6a, 6b of the first group.

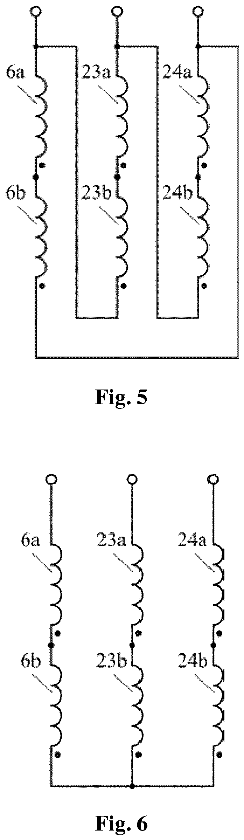

In each group, the terminals of the coils are connected in series, while the end of the winding of one coil is connected to the beginning of the other. As a result, the output voltages in the coils are summed up. The phase terminals of the anchor windings can be connected to each other in a circuit as shown in Fig. 5 and Fig. 6, which corresponds to the connection of the terminals of a three-phase electric machine according to the delta or star connection scheme.

The magnitude of the displacement of the groups of the magnetic open-cores $\tau_3$ in accordance with Eq. (3) can vary discretely depending on the value of the design factor, the displacement is 120 electrical degrees for $k = 1$ or 240 electrical degrees for $k = 2$. The choice of the magnitude of displacement may be due to the requirements for the design of the generator, since this affects the order of the phases of the output voltage (A B C) or (A C B) and the linear dimensions of the inductor.

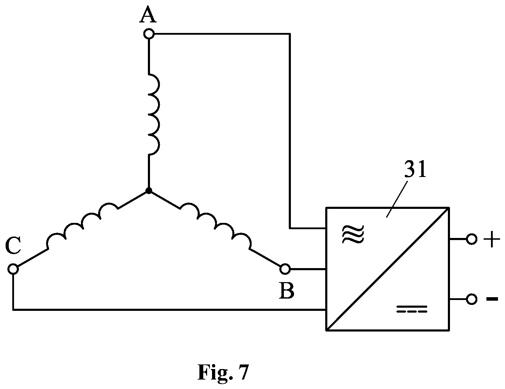

At the same time, when connecting the anchor windings of the generator to the load according to the scheme shown in Fig. 7, the sequence of the phases does not affect the voltage value at the output of the voltage converter 31.

The tape 25 can be made in the form of a linear rod or made in the form of a closed loop with a corresponding design of the inductor.

In the first case, the magnetic open-cores are arranged linearly (not shown in the figures), and the magnetic flux switch is connected to a drive that performs cyclic reciprocating movements.

In the second case, as shown in Fig. 1 and Fig. 2, the magnetic open-cores are arranged in an arc in accordance with the radius of the closed loop of the tape 25, which is connected to the rotary motion drive.

Considering that the thickness of the tape 25 made of non-magnetic material is much less than its height, recesses are made at their ends to fix the magnetic toggle switches 26, which are filled with the material of the tape 25 and hold the toggle switches 26 in the grooves of the tape 25.

Permanent magnets 11a, 11b, 12a, 12b, 13a, 13b, 14a, 14b are located on the lateral surfaces of the rods of the magnetic open-cores, while magnetically conductive gaskets 19a, 19b, 20a, 20b, 21a, 21b, 22a, 22b made of steel are used to increase the contact area, said gaskets collect the magnetic flux under the magnet and direct it into the laminated silicone steel rods.

In a generator design intended to be connected to a rotary motion drive, the gaskets 21a, 21b, 22a, 22b made of steel being located under the middle magnets 13a, 13b, 14a, 14b can distort the uniform change in magnetic resistance when the toggle switches 26 are moved in a circle. To eliminate the cause of this distortion, at the ends of the gaskets with the protrusion 21a, 21b, 22a, 22b located under the middle magnets 13a, 13b, 14a, 14b, a recess is made from the side of the air gaps $\delta_1$ and $\delta_2$. The width of the recess overlaps the distance between adjacent outer rods 4a, 4b, 7a, 7b and 8a, 8b, 9a, 9b, and its depth corresponds to the displacement $\tau_3$ of the groups of the magnetic open-cores.

A characteristic property of the magnetic open-cores in the present invention design is the possibility to manufacture them from laminated silicone steel using waste-free tape winding technology. As a result, the laminated silicone steel sheets are disposed perpendicular to the movement of the magnetic flux switch tape 25.

In such a design, the width of the teeth at the ends of the rods of the magnetic open-cores can be formed by changing the number of sheets of laminated silicone steel, therefore, changing the design of the magnetic open-cores does not require large costs for restructuring production. The teeth at the ends of the rods of the magnetic open-cores are placed in the grooves of the plates 5a, 5b of non-magnetic material. In this case, the plates fix the position of the teeth at a distance in accordance with Eq. (1) - (3) and combine the magnetic open-cores into two sections, separated by the movable tape 25 and air gaps $\delta_1$ and $\delta_2$.

One of the examples of the application of the present invention generator design can be its use as a voltage source to power bicycle electronics devices through a voltage converter 31. In this case, the wheel will be used as a drive, and the inductor is placed on the bike frame. In this design, the generator does not require a separate, load-bearing, robust housing and does not use bearings.

Thus, the characterising features of the present invention design can significantly improve the specific performance of the low-power generator.


## Claims

**1.** Magnetic flux switching type permanent magnet generator, comprising a permanent magnet, a magnetic flux switch, connected to a drive, and inductor, which contains a group of magnetic open-cores, made of laminated silicone steel sheets, said group includes two pairs of the magnetic open-cores, sections of the magnetic open-cores of which contain two parallel inner rods of first pair (1a, 2a) and second pair (1b, 2b) and two outer rods of first pair (3a, 4a) and second pair (3b, 4b), wherein an anchor winding is wound around the inner rods (1a, 2a, 1b, 2b) and outer rods (3a, 4a, 3b, 4b) are placed on outer side of the anchor winding, open ends of the inner rods and the outer rods are teeth of the magnetic open-cores, the magnetic flux switch is made in the form of a tape (25) of non-magnetic material, on which toggle switches (26) of the magnetic flux are placed and fixed in grooves with a uniform step $\tau_z$, said toggle switches (26) being made of laminated silicone steel, wherein, the sheets of laminated silicone steel of all rods (1a, 2a, 3a, 4a, 1b, 2b, 3b, 4b) of the magnetic open-cores and toggle switches (26) of magnetic flux are perpendicular to the direction of movement of the tape (25) of the magnetic flux switch; the teeth at the end of the inner rods (1a, 2a) and the outer rods (3a, 4a) of the magnetic open-cores located on one side of the tape (25) of the magnetic flux switch, are placed in the grooves of a first plate (5a) made of non-magnetic material, and the teeth at the end of the inner rods (1b, 2b) and the outer rods (3b, 4b) of magnetic open-cores located on the other side of the tape (25) of the magnetic flux switch, are placed in the grooves of a second plate (5b) made of non-magnetic material; the distance between the tooth on the end of the inner bar (1a, 1b) and the tooth on the end of the outer bar (3a, 3b) in each pair of the magnetic open-cores is determined by the Eq.

$$\tau_1 = 3/2\tau_z \qquad (1)$$

the teeth at the ends of all inner rods (1a, 1b, 2a, 2b) and the outer rods (3a, 3b, 4a, 4b) are separated from the magnetic toggle switches (26) by air gaps $\delta_1$ and $\delta_2$; the distance between the teeth at the ends of the inner rods (1a, 1b) and (2a, 2b) in each pair of the magnetic open-cores is determined by the Eq.

$$\tau_2 = \tau_z. \qquad (2)$$

on the inner rods (1a, 2a) and (1b, 2b) of each pair of the magnetic open-cores the anchor winding is placed, in which the output of one coil (6a) is connected to the input of another coil (6b);
**characterized in that** the inductor contains three said groups of the magnetic open-cores with the anchor windings and the permanent magnets, wherein the outer rods (7a, 7b, 8a, 8b) of the second group of the magnetic open-cores are separated from the outer rods (4a, 4b) of the first group and from the outer rods of the third group (9a, 9b) of the magnetic open-cores at a distance that is determined by the Eq.

$$\tau_3 = k/3\tau_z, \qquad\qquad (3)$$

where k is a design factor equal to 1 or 2,
wherein, the magnetic open-cores connected by the first plate (5a) of non-magnetic material form a first section of the magnetic open-cores, and the magnetic open-cores connected by a second plate (5b) of non-magnetic material form a second section of the magnetic open-cores; on outer rods (3a, 3b) of the first group and on outer rods (10a, 10b) of the third group of both sections of the magnetic open-cores, said outer rods (3a, 3b, 10a, 10b) being lateral to assembled three groups of the magnetic open-cores, on their lateral outer surfaces which are lateral side of the sheets of laminated silicone steel being perpendicular to the direction of movement of the tape (25), four lateral permanent magnets (11a, 11b) and (12a, 12b) are placed; on the lateral surfaces of the adjacent outer rods (4a, 4b) of the first and outer rods (7a, 7b) of the second group of the magnetic open-cores and on the lateral surfaces of the adjacent outer rods (8a, 8b) of the second and outer rods (9a, 9b) of the third group of both sections of the magnetic open-cores are placed four middle permanent magnets (13a, 13b, 14a, 14b) which are common to the rods (4a, 4b, 7a, 7b) and (8a, 8b, 9a, 9b) in adjacent groups; lateral permanent magnets (11a, 12a) and middle permanent magnets (13a, 14a) in the first section of the magnetic open-cores have the same polarity, and lateral permanent magnets (11b, 12b) and middle permanent magnets (13b, 14b) in the second section of the magnetic open cores have polarity opposite to that of the permanent magnets (11a, 12a, 13a, 14a) of the first section; wherein in each group the magnetic flux in the inner rods (1a, 1b, 2a, 2b, 15a, 15b, 16a, 16b, 17a, 17b, 18a, 18b) is directed in one direction, between all permanent magnets of the first section (11a, 12a, 13a, 14a) and all permanent magnets in the second section (11b, 12b, 13b, 14b) of the magnetic open cores and the lateral surfaces of the outer rods (3a, 3b, 4a, 4b, 7a, 7b, 8a, 8b, 9a, 9b, 10a, 10b) of the magnetic open cores are placed gaskets (19a, 19b, 20a, 20b, 21a, 21b, 22a, 22b) made of steel; the lateral permanent magnets (11a, 11b, 12a, 12b) and the middle permanent magnets (13a, 13b, 14a, 14b) of the first and second sections are connected by bridges (27, 28, 29, 30) made of laminated silicone steel, and free terminals of the anchor windings (6a, 6b, 23a, 23b, 24a, 24b) of all three groups of the magnetic open-cores are connected to each other according to a connection scheme of the anchor windings of a three-phase electrical machine.

2. The generator according to claim 1, wherein the free terminals of the anchor windings (6a, 6b, 23a, 23b, 24a, 24b) of all three groups of the magnetic open-cores are interconnected according to the connection scheme of the anchor windings of a three-phase electric machine with a star connection.

3. The generator according to claim 1, wherein the free terminals of the anchor windings (6a, 6b, 23a, 23b, 24a, 24b) of all three groups of the magnetic open-cores are connected to each other according to the connection scheme of the anchor windings of a three-phase electric machine with a delta connection.

4. The generator according to claim 1, wherein the gaskets (19a, 19b, 20a, 20b) made of steel being located on the side surfaces of the outer rods (3a, 3b) of the first and third (10a, 10b) groups of the magnetic open-cores of the first and second sections, have a slot, side walls of which enclose said outer rods.

5. The generator according to claim 1, wherein the gaskets (21a, 21b, 22a, 22b) made of steel being located on the side surfaces of the outer rods (4, a 4b) of the first group and of the outer rods (7a, 7b) of the second group and on the side surfaces of the outer rods (8a, 8b) of the second group and the outer rods (9a, 9b) of the third group of the magnetic open-cores of the first and second sections, have a protrusion that is pressed against walls of said outer rods.

6. Generator according to claim 1, wherein the gaskets (21a, 21b, 22a, 22b) made of steel being located under the middle magnets (13a, 13b, 14a, 14b) have a cutout between the teeth on the outer rods (4, a 4b, 7a, 7b) of the first and second groups and on the outer rods (8a, 8b, 9a, 9b) of the second and third groups of the magnetic open-cores of the first and second sections, which is deepened from the air gap by an amount equal to $\tau_3$.

7. The generator according to claim 1, wherein the tape (25) of the magnetic flux switch with the magnetic flux toggle switches (26) fixed therein is made in the form of a closed loop configured to be connected to a rotary motion drive.

8. The generator according to claim 1, wherein the magnetic flux switch tape (25) with magnetic flux toggle switches (26) fixed therein is configured to be connected to a linear reciprocating drive.

9. The generator according to claim 1, wherein recesses are made at ends of the magnetic flux toggle switches (26).

10. The generator according to claim 1, further comprising a voltage convertor (31) and wherein phase terminals of the anchor windings are connected to an input of the voltage converter (31).


**Patentansprüche**

1. Dauermagnetgenerator vom Magnetflussschaltertyp, der einen Dauermagneten, einen mit einem Antrieb verbundenen Magnetflussschalter und eine Induktionsspule umfasst, die eine Gruppe von offenen Magnetkernen aus laminierten Silikonstahlblechen enthält, wobei die Gruppe zwei Magnetkernpaare umfasst, wobei Abschnitte der magnetischen offenen Kerne zwei parallele innere Stäbe des ersten Paares (1a, 2a) und des zweiten Paares (1b, 2b) und zwei äußere Stäbe des ersten Paares (3a, 4a) und des zweiten Paares (3b, 4b) enthalten, wobei eine Ankerwicklung um die inneren Stäbe (1a, 2a, 1b, 2b) gewickelt ist und die äußeren Stäbe (3a, 4a, 3b, 4b) auf der Außenseite der Ankerwicklung angeordnet sind, offenen Enden der inneren Stäbe und der äußeren Stäbe Zähne der offenen Magnetkerne sind, der Magnetflussschalter in Form eines Bandes (25) aus nichtmagnetischem Material hergestellt ist, auf dem Kippschalter (26) des Magnetflusses in Nuten mit einem gleichmäßigen Schritt $\tau_z$ angeordnet und befestigt sind, wobei die Kippschalter (26) aus laminiertem Silikonstahl hergestellt sind, wobei die Blätter aus laminiertem Silikonstahl aller Stäbe (1a, 2a, 3a, 4a, 1b, 2b, 3b, 4b) der offenen Magnetkerne und der Kippschalter (26) des magnetischen Flusses senkrecht zur Bewegungsrichtung des Bandes (25) des Magnetflussschalters sind; die Zähne am Ende der inneren Stäbe (1a, 2a) und der äußeren Stäbe (3a, 4a) der offenen Magnetkerne, die sich auf einer Seite des Bandes (25) des Magnetflussschalters befinden, in den Rillen einer ersten Platte (5a) aus nichtmagnetischem Material angeordnet sind, und die Zähne am Ende der inneren Stäbe (1b, 2b) und der äußeren Stäbe (3b, 4b) der offenen Magnetkerne, die sich auf der anderen Seite des Bandes (25) des Magnetflussschalters befinden, in den Nuten einer zweiten Platte (5b) aus nichtmagnetischem Material angeordnet sind; der Abstand zwischen dem Zahn am Ende des inneren Stabes (1a, 1b) und dem Zahn am Ende des äußeren Stabes (3a, 3b) in jedem Paar der offenen Magnetkerne durch die folgende Gleichung bestimmt wird:

$$\tau_1 = 3/2\tau_z \qquad\qquad (1)$$

die Zähne an den Enden aller inneren Stäbe (1a, 1b, 2a, 2b) und der äußeren Stäbe (3a, 3b, 4a, 4b) von den magnetischen Kippschaltern (26) durch Luftspalte $\delta_1$ und $\delta_2$ getrennt sind; der Abstand zwischen den Zähnen an den Enden der inneren Stäbe (1a, 1b) und (2a, 2b) in jedem Paar der offenen Magnetkerne durch die Gleichung bestimmt wird:

$$\tau_2 = \tau_z \qquad\qquad (2)$$

auf den inneren Stäben (1a, 2a) und (1b, 2b) jedes Paares der offenen Magnetkerne befindet sich die Ankerwicklung, bei der der Ausgang einer Spule (6a) mit dem Eingang einer anderen Spule (6b) verbunden ist; **dadurch gekennzeichnet, dass** der Induktor drei besagte Gruppen der offenen Magnetkerne mit den Ankerwicklungen und den Permanentmagneten enthält, wobei die äußeren Stäbe (7a, 7b, 8a, 8b) der zweiten Gruppe der offenen Magnetkerne von den äußeren Stäben (4a, 4b) der ersten Gruppe und von den äußeren Stäben der dritten Gruppe (9a, 9b) der offenen Magnetkerne in einem Abstand getrennt sind, der durch die folgende Gleichung bestimmt ist:

$$\tau_3 = k/3\tau_z, \qquad\qquad (3)$$

wobei k ein Auslegungsfaktor von 1 oder 2 ist,
wobei die durch die erste Platte (5a) aus nichtmagnetischem Material verbundenen magnetischen offenen Kerne einen ersten Abschnitt der magnetischen offenen Kerne bilden und die durch eine zweite Platte (5b) aus nichtmagnetischem Material verbundenen magnetischen offenen Kerne einen zweiten Abschnitt der magnetischen offenen Kerne bilden; auf äußeren Stäben (3a, 3b) der ersten Gruppe und auf äußeren Stäben (10a, 10b) der dritten Gruppe der beiden Abschnitte der offenen Magnetkerne, wobei die äußeren Stäbe (3a, 3b, 10a, 10b) seitlich zu den drei zusammengesetzten Gruppen der offenen Magnetkerne liegen, auf ihren seitlichen Außenflächen, die seitlich zu den Blechen aus laminiertem Silikonstahl liegen und senkrecht zur Bewegungsrichtung des Bandes (25) sind, vier seitliche Dauermagnete (11a, 11b) und (12a, 12b) angeordnet sind; auf den Seitenflächen der benachbarten äußeren Stäbe (4a, 4b) des ersten und äußeren Stabs (7a, 7b) der zweiten Gruppe der offenen Magnetkerne und auf den Seitenflächen der benachbarten äußeren Stäbe (8a, 8b) des zweiten und äußeren Stabs (9a, 9b) der dritten Gruppe der beiden Abschnitte der offenen Magnetkerne vier mittlere Dauermagnete (13a, 13b, 14a, 14b) angebracht sind, die gemeinsam für den Stäben (4a, 4b, 7a, 7b) und (8a, 8b, 9a, 9b) in benachbarten Gruppen sind; seitliche Dauermagnete (11a, 12a) und mittlere Dauermagnete (13a, 14a) im ersten Abschnitt der offenen Magnetkerne eine gleiche Polarität aufweisen, und seitliche Dauermagnete (11b, 12b) und mittlere Dauermagnete (13b, 14b) im zweiten Abschnitt der offenen Magnetkerne eine Polarität aufweisen, die zu derjenigen der Dauermagnete (11a, 12a, 13a, 14a) des ersten Abschnitts entgegengesetzt ist; wobei in jeder Gruppe der magnetische Fluss in den inneren Stäben (1a, 1b, 2a, 2b, 15a, 15b, 16a, 16b, 17a, 17b, 18a, 18b) in eine Richtung gerictet ist, zwischen allen Permanentmagneten des ersten Abschnitts (11a, 12a, 13a, 14a) und allen Permanentmagneten im zweiten Abschnitt (11b, 12b, 13b, 14b) der offenen Magnetkerne und den Seitenflächen der äußeren Stäbe (3a, 3b, 4a, 4b, 7a, 7b, 8a, 8b, 9a, 9b, 10a, 10b) der offenen Magnetkerne Dichtungen (19a, 19b, 20a, 20b, 21a, 21b, 22a, 22b) aus Stahl angeordnet sind; die seitlichen Dauermagnete (11a, 11b, 12a, 12b) und die mittleren Dauermagnete (13a, 13b, 14a, 14b) des ersten und zweiten Abschnitts durch Brücken (27, 28, 29, 30) aus laminiertem Silikonstahl verbunden sind, und freie Klemmen der Ankerwicklungen (6a, 6b, 23a, 23b, 24a, 24b) aller drei Gruppen der offenen Magnetkerne gemäß einem Anschlussschema der Ankerwicklungen einer elektrischen Drehstrommaschine miteinander verbunden sind.

2. Dauermagnetgenerator nach Anspruch 1, wobei die freien Klemmen der Ankerwicklungen (6a, 6b, 23a, 23b, 24a, 24b) aller drei Gruppen der magnetischen offenen Kerne gemäß dem Anschlussschema der Ankerwicklungen einer dreiphasigen elektrischen Maschine mit einer Sternschaltung miteinander verbunden sind.

3. Dauermagnetgenerator nach Anspruch 1, wobei die freien Klemmen der Ankerwicklungen (6a, 6b, 23a, 23b, 24a, 24b) aller drei Gruppen der magnetischen offenen Kerne gemäß dem Anschlussschema der Ankerwicklungen einer dreiphasigen elektrischen Maschine mit einer Dreieckschaltung miteinander verbunden sind.

4. Dauermagnetgenerator nach Anspruch 1, wobei die Dichtungen (19a, 19b, 20a, 20b) aus Stahl, die sich an den Seitenflächen der äußeren Stäbe (3a, 3b) der ersten und dritten (10a, 10b) Gruppe der offenen Magnetkerne des ersten und zweiten Abschnitts befinden, einen Slot aufweisen, dessen Seitenwände die äußeren Stäbe umschließen.

5. Dauermagnetgenerator nach Anspruch 1, wobei die aus Stahl hergestellten Dichtungen (21a, 21b, 22a, 22b) an den Seitenflächen der äußeren Stäbe (4, 4b) der ersten Gruppe und der äußeren Stäbe (7a, 7b) der zweiten Gruppe und an den Seitenflächen der äußeren Stäbe (8a, 8b) der zweiten Gruppe und der äußeren Stäbe (9a, 9b) der dritten Gruppe der magnetischen offenen Kerne des ersten und zweiten Abschnitts angeordnet sind, einen Vorsprung haben, der gegen die Wände der äußeren Stäbe gedrückt wird.

6. Dauermagnetgenerator nach Anspruch 1, wobei die Dichtungen (21a, 21b, 22a, 22b) aus Stahl, die sich unter den mittleren Magneten (13a, 13b, 14a, 14b) befinden, zwischen den Zähnen an den äußeren Stäben (4, 4b, 7a, 7b) der ersten und zweiten Gruppe und an den äußeren Stäben (8a, 8b, 9a, 9b) der zweiten und dritten Gruppe der offenen Magnetkerne des ersten und zweiten Abschnitts einen Ausschnitt haben, der gegenüber dem Luftspalt um den Wert $\tau_3$ vertieft ist.

7. Dauermagnetgenerator nach Anspruch 1, wobei das Band (25) des Magnetflussschalters mit den darin befestigten Kippschaltern (26) des Magnetflusses in Form einer geschlossenen Schleife ausgeführt ist, die für den Anschluss an einen Drehantrieb konfiguriert ist.

8. Dauermagnetgenerator nach Anspruch 1, wobei das Band (25) des Magnetfluss mit darin befestigten Kippschaltern (26) des Magnetflusses so konfiguriert ist, dass es mit einem linearen Hubantrieb verbunden ist.

9. Dauermagnetgenerator nach Anspruch 1, wobei an den Enden der Kippschalter (26) des Magnetflusses Aussparungen angebracht sind.

**10.** Dauermagnetgenerator nach Anspruch 1, der ferner einen Spannungswandler (31) umfasst und wobei die Phasenanschlüsse der Ankerwicklungen mit einem Eingang des Spannungswandlers (31) verbunden sind.

**Revendications**

**1.** Générateur à aimant permanent du type à commutateur de flux magnétique, comprenant un aimant permanent, un commutateur de flux magnétique, relié à un entraînement, et un inducteur, qui contient un groupe de noyaux ouverts magnétiques, constitués de tôles d'acier laminées au silicone, ce groupe comprend deux paires de noyaux ouverts magnétiques, dont les sections contiennent deux tiges intérieures parallèles de la première paire (1a, 2a) et de la deuxième paire (1b, 2b) et deux tiges extérieures de la première paire (3a, 4a) et de la deuxième paire (3b, 4b), dans lequel une bobine d'ancrage est enroulée autour des tiges intérieures (1a, 2a, 1b, 2b) et des tiges extérieures (3a, 4a, 3b, 4b) sont placées sur le côté extérieur du bobines d'ancrage, les extrémités ouvertes des tiges intérieures et les tiges extérieures sont des dents des noyaux ouverts magnétiques, le commutateur de flux magnétique est réalisé sous la forme d'un ruban (25) en matériau amagnétique, sur lesquels des interrupteurs à bascule (26) du flux magnétique sont placés et fixés dans des rainures avec un pas uniforme $\tau_z$, lesdits interrupteurs à bascule (26) étant en acier laminé au silicone, dans lequel les tôles d'acier laminé au silicone de toutes les tiges (1a, 2a, 3a, 4a, 1b, 2b, 3b, 4b) des noyaux ouverts magnétiques et des interrupteurs à bascule (26) du flux magnétique sont perpendiculaires à la direction du mouvement du ruban (25) du commutateur de flux magnétique ; les dents à l'extrémité des tiges intérieures (1a, 2a) et les tiges extérieures (3a, 4a) des noyaux ouverts magnétiques situés d'un côté du ruban (25) du commutateur de flux magnétique, sont placées dans les rainures d'une première plaque (5a) en matériau amagnétique, et les dents à l'extrémité des tiges intérieures (1b, 2b) et des tiges extérieures (3b, 4b) de noyaux ouverts magnétiques situés de l'autre côté du ruban (25) du commutateur de flux magnétique, sont placées dans les rainures d'une deuxième plaque (5b) en matériau amagnétique ; la distance entre la dent à l'extrémité de la barre intérieure (1a, 1b) et la dent à l'extrémité de la barre extérieure (3a, 3b) dans chaque paire de noyaux ouverts magnétiques est déterminée par l'Éq.

$$\tau_1 = 3/2\tau_z \qquad\qquad (1)$$

les dents aux extrémités de toutes les tiges intérieures (1a, 1b, 2a, 2b) et les tiges extérieures (3a, 3b, 4a, 4b) sont séparées des interrupteurs à bascule magnétiques (26) par des entrefers $\delta_1$ et $\delta_2$ ; la distance entre les dents aux extrémités des tiges intérieures (1a, 1b) et (2a, 2b) dans chaque paire de noyaux ouverts magnétiques est déterminée par l'Éq.

$$\tau_2 = \tau_z. \qquad\qquad (2)$$

sur les tiges intérieures (1a, 2a) et (1b, 2b) de chaque paire de noyaux magnétiques ouverts est placée, dans laquelle la sortie d'une bobine d'ancrage (6a) est connectée à l'entrée d'une autre bobine (6b) ; **caractérisé par le fait que** l'inducteur contient trois groupes de noyaux ouverts magnétiques avec les bobines d'ancrage et les aimants permanents, dans lequel les tiges extérieures (7a, 7b, 8a, 8b) du deuxième groupe des noyaux ouverts magnétiques sont séparées des tiges extérieures (4a, 4b) du premier groupe et des tiges extérieures du troisième groupe (9a, 9b) des noyaux ouverts magnétiques à une distance déterminée par l'Éq.

$$\tau_3 = k/3\tau_z, \qquad\qquad (3)$$

où $k$ est un coefficient égal à 1 ou 2, dans lequel les noyaux ouverts magnétiques reliés par la première plaque (5a) en matériau non magnétique forment une première section des noyaux ouverts magnétiques, et les noyaux ouverts magnétiques reliés par une deuxième plaque (5b) en matériau amagnétique forment une deuxième section des noyaux ouverts magnétiques ; sur les tiges extérieures (3a, 3b) du premier groupe et sur les tiges extérieures (10a, 10b) du troisième groupe des deux sections des noyaux ouverts magnétiques, lesdites tiges extérieures (3a, 3b, 10a, 10b) étant latérales aux trois groupes assemblés des noyaux ouverts magnétiques, sur leurs surfaces extérieures latérales qui sont latérales des tôles d'acier laminé au silicone perpendiculairement à la direction de déplacement du ruban (25), quatre aimants permanents latéraux (11a, 11b) et (12a, 12b) sont placés ; sur les surfaces latérales des tiges extérieures adjacentes (4a, 4b) du premier groupe et des tiges extérieures (7a, 7b) du deuxième groupe de noyaux ouverts magnétiques et sur les surfaces latérales des tiges extérieures adjacentes (8a, 8b) du deuxième groupe et des tiges extérieures (9 a, 9b) du troisième groupe des deux sections des noyaux ouverts magnétiques sont placés quatre aimants permanents centraux (13a, 13b, 14a, 14b) qui sont communs aux tiges (4a, 4b, 7a, 7b) et (8a, 8b, 9a, 9b) dans des groupes adjacents ; les aimants permanents latéraux (11a, 12a) et les aimants permanents moyens (13a, 14a) dans la première section des noyaux ouverts magnétiques ont la même polarité, et les aimants permanents latéraux (11b, 12b) et les aimants permanents centraux (13b, 14b) de la deuxième section des noyaux ouverts magnétiques ont une polarité opposée à celle des aimants permanents (11a, 12a, 13a, 14a) de la première section ; dans laquelle dans chaque groupe le flux magnétique dans les tiges intérieures (1a, 1b, 2a, 2b, 15a, 15b, 16a, 16b, 17a, 17b, 18a, 18b) est dirigé dans une direction, entre tous les aimants permanents de la première section (11a, 12a, 13a, 14a) et tous les aimants permanents de la seconde section (11b, 12 b, 13 b, 14 b) des noyaux ouverts magnétiques et les surfaces latérales des tiges extérieures (3a, 3 b, 4a, 4 b, 7 a, 7 b, 8a, 8 b, 9a, 9 b, 10a, 10 b) des noyaux ouverts magnétiques sont placés dans des joints d'étanchéité (19a, 19 b, 20a, 20 b, 21a, 21 b, 22a, 22 b) en acier ; les aimants permanents latéraux (11a, 11b, 12a, 12b) et les aimants permanents centraux (13a, 13b, 14a, 14b) des première et seconde sections sont reliés par des ponts (27, 28, 29, 30) en acier laminé au silicone, et des bornes libres des bobines d'ancrage (6a, 6b, 23a, 23b, 24a, 24b) des trois groupes de noyaux ouverts magnétiques sont reliés entre eux selon un schéma de connexion des bobines d'ancrage d'une machine électrique triphasée.

2. Le générateur selon la revendication 1, dans lequel les bornes libres des bobines d'ancrage (6a, 6b, 23a, 23b, 24a, 24b) des trois groupes de noyaux ouverts magnétiques sont interconnectées selon le schéma de connexion des bobines d'ancrage d'une machine électrique triphasée avec une connexion en étoile.

3. Le générateur selon la revendication 1, dans lequel les bornes libres des bobines d'ancrage (6a, 6b, 23a, 23b, 24a, 24b) des trois groupes de noyaux ouverts magnétiques sont connectées les unes aux autres selon le schéma de connexion des bobines d'ancrage d'une machine électrique triphasée avec une connexion en triangle.

4. Le générateur selon la revendication 1, dans lequel les joints (19a, 19b, 20a, 20b) en acier situés sur les surfaces latérales des tiges extérieures (3 a, 3b) des premier et troisième groupes (10a, 10b) des noyaux ouverts magnétiques des première et deuxième sections, ont une fente dont les parois latérales enferment lesdites tiges extérieures.

5. Le générateur selon la revendication 1, **caractérisé en ce que** les joints (21a, 21b, 22a, 22b) en acier étant situés sur les surfaces latérales des tiges extérieures (4a, 4b) du premier groupe et des tiges extérieures (7a, 7b) du deuxième groupe et sur les surfaces latérales des tiges extérieures (8a, 8b) du deuxième groupe et des tiges extérieures (9a, 9b) du troisième groupe des noyaux ouverts magnétiques des première et deuxième sections, présente une saillie qui est plaquée contre les parois desdites tiges extérieures.

6. Générateur selon la revendication 1, dans lequel les joints (21a, 21b, 22a, 22b) en acier situés sous les aimants du milieu (13a, 13b, 14a, 14b) ont une découpe entre les dents sur les tiges extérieures (4a, 4b, 7a, 7b) du premier et du deuxième groupes et sur les tiges extérieures (8a, 8b, 9a, 9b) des deuxième et troisième groupes des noyaux ouverts magnétiques des première et deuxième sections, qui sont approfondis à partir de l'intervalle d'air d'une quantité égale à $\tau_3$.

7. Le générateur selon la revendication 1, dans lequel le ruban (25) de commutateur de flux magnétique avec les interrupteurs à bascule de flux magnétique (26) qui y sont fixés est fait sous la forme d'une boucle fermée configurée pour être connectée à un entraînement de mouvement rotatif.

8. Le générateur selon la revendication 1, dans lequel le ruban de commutateur de flux magnétique (25) avec les interrupteurs à bascule de flux magnétique (26) qui y sont fixés est configuré pour être connecté à un entraînement linéaire alternatif.

9. Le générateur selon la revendication 1, dans lequel des évidements sont ménagés aux extrémités des interrupteurs à bascule de flux magnétique (26).

10. Le générateur selon la revendication 1, comprenant en outre un convertisseur de tension (31) et dans lequel les bornes de phase des bobines d'ancrage sont connectées à une entrée du convertisseur de tension (31).

**Fig. 1**

**Fig. 2**

**Fig. 3**

**Fig. 4**

**Fig. 5**

**Fig. 6**

**Fig. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- LV 15501 A